# EUROPÄISCHE PATENTSCHRIFT

(11) **EP 1 192 614 B1**
(45) Veröffentlichungstag und Bekanntmachung des Hinweises auf die Patenterteilung: **08.01.2003**
(21) Anmeldenummer: 00951236.9
(22) Anmeldetag: 21.06.2000
(51) Int. Cl.: G08C 19/02

(54) **MESSUMFORMER MIT KORRIGIERTEM AUSGANGSSIGNAL**
MEASURING TRANSDUCER HAVING A CORRECTED OUTPUT SIGNAL
TRANSDUCTEUR DE MESURE A SIGNAL DE SORTIE CORRIGE

(30) Priorität: 02.07.1999 DE 19930661
(43) Veröffentlichungstag der Anmeldung: 03.04.2002
(73) Patentinhaber: SIEMENS AKTIENGESELLSCHAFT, 80333 München (DE)
(72) Erfinder: PRAMANIK, Robin, D-76135 Karlsruhe (DE)
(86) Internationale Anmeldenummer: DE0002026
(87) Internationale Veröffentlichungsnummer: WO01003098

(56) Entgegenhaltungen:
- WO-A-88/02528
- US-A- 4 873 655
- US-A- 5 469 156

## Beschreibung

Die Erfindung betrifft einen Meßumformer, der eine Meßgröße in ein auf einer Zweidrahtleitung übertragbares analoges Ausgangssignal umformt, mit einem Sensor, einem daran angeschlossenen Analog-/Digital-Umsetzer, einer diesem nachgeordneten Recheneinheit und einer von der Recheneinheit gesteuerten und an die Zweidrahtleitung anschließbaren Ausgangsschaltung, wobei der Sensor die Meßgröße in ein Sensorsignal umformt, das in dem Analog-/Digital-Umsetzer digitalisiert und in der Recheneinheit zu einem Sollwert aufbereitet wird, mit dem in der Ausgangsschaltung das analoge Ausgangssignal auf der Zweidrahtleitung eingestellt wird.

Ein derartiger aus dem SIEMENS-Katalog MP 17, 1999, bekannter Meßumformer mit der Bezeichnung SITRANS P DS weist einen Drucksensor auf, dessen Sensorsignal verstärkt, digitalisiert und anschließend in einem Mikrocontroller ausgewertet und bezüglich Linearität und Temperaturverhalten korrigiert wird. Das so aufbereitete Sensorsignal wird in einer Ausgangsschaltung mit einem Digital-/Analog-Umsetzer in ein analoges Ausgangssignal, hier einen Ausgangsstrom im Bereich von 4 bis 20 mA, umgeformt und über eine Zweidrahtleitung an eine Auswerteeinrichtung, beispielsweise in einem Leitsystem, übertragen. Die Ausgangsschaltung enthält außerdem eine Datenschnittstelle zum Senden und Empfangen von frequenzmodulierten Signalen auf der Zweidrahtleitung nach dem HART-Protokoll.

Auch US-A-4 873 655 offenbart eine solche Vorrichtung, wobei das analoge Aussgangssignal zur Korrektur des Sollwerts herangezogen wird.

Die Umformung des aufbereiteten digitalen Sensorsignals in das analoge Ausgangssignal ist thermischen Einflüssen und alterungsbedingten Veränderungen unterworfen, woraus ein Meßfehler des Meßumformers resultiert. Zur Korrektur des Temperaturverhaltens im Rahmen der digitalen Aufbereitung des Sensorsignals können Korrekturwerte herangezogen werden, die durch aufwendige Temperaturfahrten ermittelt werden. Dazu wird die Temperatur der Meßumformer-Elektronik mittels eines separaten Temperatur-Sensors erfaßt, dessen Temperatur-Sensorsignal ebenfalls digitalisiert und in dem Mikrocontroller ausgewertet wird. Darüber hinaus kann die Temperaturkompensation auch analog mit aufwendigen Netzwerken in der Ausgangsschaltung erfolgen. Die Langzeitstabilität des Meßumformers kann durch Verwendung von driftarmen und somit teuren Bauelementen gewährleistet werden.

Der Erfindung liegt die Aufgabe zugrunde, den Meßfehler des Meßumformers mit möglichst einfachen Mitteln zu erfassen und im weiteren zu kompensieren.

Gemäß der Erfindung wird die Aufgabe dadurch gelöst, daß bei dem Meßumformer der eingangs angegebenen Art Mittel vorhanden sind, die das analoge Ausgangssignal erfassen und dieses oder ein unmittelbar daraus abgeleitetes Signal dem Analog-/Digital-Umsetzer oder einem weiteren Analog-/Digital-Umsetzer zuführen und daß die Recheneinrichtung dazu ausgebildet ist, eine Abweichung zwischen dem Ausgangssignal und dem Sollwert zu ermitteln. Mit dem für die Digitalisierung des Sensorsignals dienenden Analog-/Digital-Umsetzer steht nämlich in dem Meßumformer eine in der Regel hochgenaue und langzeitstabile Meßeinheit zur Verfügung, die bei der vorliegenden Erfindung zur Ermittlung des Meßfehlers herangezogen wird, der bei der Umsetzung des Sollwertes in das analoge Ausgangssignal auftritt. Dieser Meßfehler kann dem Anwender mitgeteilt werden, wozu der erfindungsgemäße Meßumformer vorzugsweise eine Datenschnittstelle und/oder eine Anzeigevorrichtung zur Übertragung bzw. Anzeige einer Information über die ermittelte Abweichung und damit über den Meßfehler aufweist. Die Datenschnittstelle ist dabei bevorzugt wie bei dem obengenannten Meßumformer Bestandteil der Ausgangsschaltung und ermöglicht eine Datenkommunikation über die Zweidrahtleitung nach dem HART-Protokoll.

Die Verwendung des oben erwähnten weiteren Analog-/Digital-Umsetzers kann insbesondere dann sinnvoll sein, wenn der das Sensorsignal digitalisierende Analog-/Digital-Umsetzer zusätzlich zur galvanischen Trennung zwischen Sensor und Meßumformer-Elektronik diesen soll. Solche Analog-/Digital-Umsetzer, beispielsweise Spannungs-Frequenz-Umformer, sind nämlich in der Regel relativ aufwendig, so daß der Einsatz eines weiteren einfachen Analog-/Digital-Umsetzers zur Digitalisierung des analogen Ausgangssignals bzw. des daraus abgeleiteten Signals sinnvoll sein kann.

Um eine Kompensation des bei dem Meßumformer ermittelten Meßfehlers zu ermöglichen, ist die Recheneinheit des Meßumformers vorzugsweise dazu ausgebildet, den Sollwert in Abhängigkeit von der ermittelten Abweichung zwischen dem Ausgangssignal und dem Sollwert derart zu korrigieren, daß die Abweichung zwischen dem mit dem korrigierten Sollwert eingestellten Ausgangssignal und dem nicht korrigierten Sollwert minimal wird. Bei dieser Korrektur werden Temperatureinflüsse und das Langzeitverhalten des Meßumformers gleichermaßen berücksichtigt, so daß auf aufwendige Temperaturfahrten verzichtet werden kann und die Langzeitstabilität verbessert wird, wobei gleichzeitig weniger langzeitstabile und damit preiswertere Bauelemente verwendet werden können.

Das Sensorsignal und die analoge Ausgangsgröße bzw. das daraus abgeleitete Signal können dem Analog-/Digital-Umsetzer abwechselnd über einen Multiplexer zugeführt werden. Alternativ kann ein mehrkanaliger Analog-/Digital-Umsetzer verwendet werden, wobei das Sensorsignal und das Ausgangssignal bzw. das daraus abgeleitete Signal jeweils unterschiedlichen Eingängen des Analog-Digital-Umsetzers zugeführt werden. Der gerätetechnische Aufwand wird dadurch nicht erhöht, weil, wie oben bereits erwähnt, auch schon bei dem bekannten Meßumformer in dem dortigen Analog-/Digital-Umsetzer neben dem eigentlichen Nutz-Sensorsignal noch ein weiteres Signal, nämlich das des Temperatur-Sensors in der Meßumformer-Elektronik verarbeitet wird.

Zur weiteren Erläuterung der Erfindung wird im folgenden auf die Figuren der Zeichnung Bezug genommen; im einzelnen zeigen
- Figur 1: ein erstes Ausführungsbeispiel des erfindungsgemäßen Meßumformers in Form eines vereinfachten Schaltbildes,
- Figur 2: ein Beispiel für die Einstellung des Ausgangssignals des Meßumformers,
- Figur 3: ein weiteres Ausführungsbeispiel des erfindungsgemäßen Meßumformers jeweils in Form eines vereinfachten Schaltbildes zeigen.

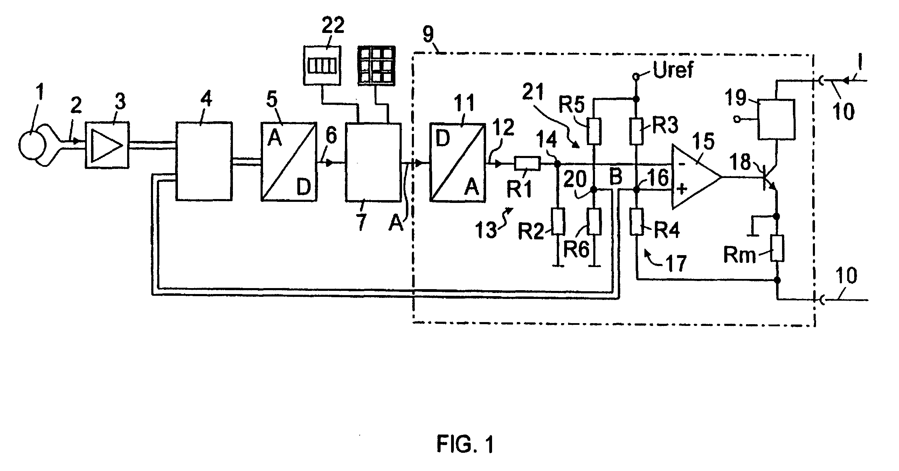

Der in Figur 1 gezeigte Meßumformer weist einen Sensor 1 auf, mit dem an einer hier nicht gezeigten Meßstelle in einer technischen Anlage eine Meßgröße, zum Beispiel ein Druck, erfaßt und in ein elektrisches Sensorsignal 2 umgewandelt wird. Das Sensorsignal 2 wird über einen Signalverstärker 3 und einen Multiplexer 4 einem Analog-/Digital-Umsetzer 5 zugeführt, der das analoge Sensorsignal 2 in ein digitales Signal 6 umsetzt. Das digitalisierte Sensorsignal 6 wird einer Recheneinheit 7, hier ein Mikrocontroller, zugeführt, in der das Sensorsignal 6 beispielsweise durch Liniarisierung und Skalierung zu einem digitalen Sollwert A aufbereitet wird. Mit diesem Sollwert A wird in einer Ausgangsschaltung 9 des Meßumformers ein analoges Ausgangssignal, hier ein Strom I zwischen 4 und 20 mA, auf einer an der Ausgangsschaltung 9 angeschlossenen Zweidrahtleitung 10 eingestellt. Hierzu enthält die Ausgangsschaltung 9 einen Digital-/Analog-Umsetzer 11, der den digitalen Sollwert A in einen analogen Sollwert 12 umsetzt. Dieser analoge Sollwert 12 liegt als Spannung bzw. Strom an zwei in Reihe geschalteten Widerständen R1 und R2 an. Die Widerstände R1 und R2 bilden einen Spannungsteiler 13, an dessen Mittenabgriff 14 der invertierende Eingang eines Operationsverstärkers 15 angeschlossen ist. Der nichtinvertierende Eingang des Operationsverstärkers 15 ist an einem Abgriff 16 eines weiteren Spannungsteilers 17 angeschlossen, der auf einer Seite des Abgriffs 16 von einem Widerstand R3 und auf der anderen Seite von zwei in Reihe liegenden Widerständen R4 und Rm gebildet wird. An dem Spannungsteiler 17 liegt eine stabile Referenzspannung Uref. Der Ausgang des Operationsverstärkers 15 steuert einen Transistor 18, der mit seiner Kollektor-Emitter-Strecke in den Stromweg der Zweidrahtleitung 10 angeordnet ist. In diesen Stromweg ist auch der als Meßwiderstand für den Strom I dienende Widerstand Rm des Spannungsteilers 17 derart eingefügt, daß der Strom I als Spannungsabfall an dem Widerstand Rm auf den nichtinvertierenden Eingang des Operationsverstärkers 15 rückgekoppelt wird, welcher den Transistor 18 im Sinne einer Einstellung des Stromes I auf den von dem Digital-/Analog-Umsetzer 11 vorgegebenen Sollwert 12 ansteuert. Der Strom I wird als analoges Ausgangssignal des Meßumformers über die Zweidrahtleitung 10 an eine hier nicht gezeigte Auswerteeinrichtung eines Leitsystems der technischen Anlage übertragen. In Stromweg der Zweidrahtleitung 10 ist außerdem eine aus dem Strom I die Versorgungsspannung für den Meßumformer generierende Stromversorgungseinrichtung 19 angeordnet.

Die Umwandlung des digitalen Sollwertes A in das Ausgangssignal I auf der Zweidrahtleitung 10 kann aufgrund von Temperatur- und Langzeiteinflüssen fehlerbehaftet sein. Der daraus resultierende Meßfehler des Meßumformers wird als Abweichung zwischen dem Sollwert A und dem tatsächlichen Ausgangssignal I erfaßt. Dazu wird das Ausgangssignal I, oder hier ein daraus abgeleitetes Signal, erfaßt, in dem Analog-/Digital-Umsetzer 5 digitalisiert und in der Recheneinheit 7 mit dem digitalen Sollwert A verglichen. Die Digitalisierung des Ausgangssignals I bzw. des daraus abgeleiteten Signals ist ohne nennenswerten Zusatzaufwand möglich, weil mit dem Analog-/Digital-Umsetzer 5 bereits eine hochgenaue und langzeitstabile Meßeinheit zur Verfügung steht. Die Meßauflösung und Genauigkeit des Analog-/Digital-Umsetzers 5 ist nämlich mit hier z.B. 13 bit erheblich größer als die der Ausgangsschaltung 9, deren Digital-/Analog-Umsetzer 11 beispielsweise eine Auflösung von 10 bit hat. Ein Grund dafür ist, daß das Sensorsignal 2 mit einer erhöhten Auflösung und Genauigkeit erfaßt werden muß, um in der Recheneinheit 7 Nichtlinearitäten des Sensors 1 ausgleichen zu können. Ein weiterer Grund liegt darin, daß oft nur ein Teil des Meßbereichs des Sensors 1 auf den Aussteuerungsbereich des Ausgangsstromes I abgebildet werden soll. Wenn beispielsweise mit dem Sensor I ein Druck von 0 bis 4 bar gemessen werden kann, aber nur ein Teilbereich von 2 bis 3 bar auf den Aussteuerungsbereich von 4 bis 20 mA der Ausgangsschaltung 9 abgebildet werden soll, so muß der Analog-/Digital-Umsetzer 5 eine Auflösung von 13 bit aufweisen, um den Teilbereich von 2 bis 3 bar mit einer Auflösung von 11 bit digitalisieren zu können.

Zur Erfassung des aus dem Ausgangssignal I abgeleiteten Signals wird bei dem hier gezeigten Ausführungsbeispiel die Differenzspannung B zwischen dem Abgriff 16 des Spannungsteilers 17 und einem Abgriff 20 eines aus zwei Widerständen R5 und R6 gebildeten und ebenfalls an der Referenzspannung Uref liegenden weiteren Spannungsteilers 21 über den Multiplexer 4 dem Analog-/Digital-Umsetzer 5 zugeführt. Durch Abgleich der Widerstände R3, R4, Rm, R5 und R6 in den beiden Spannungsteilern 17 und 21 kann erreicht werden, daß die Differenzspannung B zwischen den Abgriffen 16 und 20 von der Referenzspannung Uref und deren etwaiger Ungenauigkeit unabhängig ist und damit nur noch von dem Strom I und den Werten der Widerstände in den Spannungsteilern 17 und 21 abhängt. In der Recheneinheit 7 wird aus dem digitalen Sollwert A und der digitalisierten Differenzspannung B der Meßfehler des Meßumformers berechnet. Dieser Meßfehler kann an eine Anzeigeeinheit 22 des Meßumformers oder als frequenzmoduliertes Signal nach den HART-Protokoll über die Ausgangsschaltung 9 auf die Zweidrahtleitung 10 ausgegeben werden.

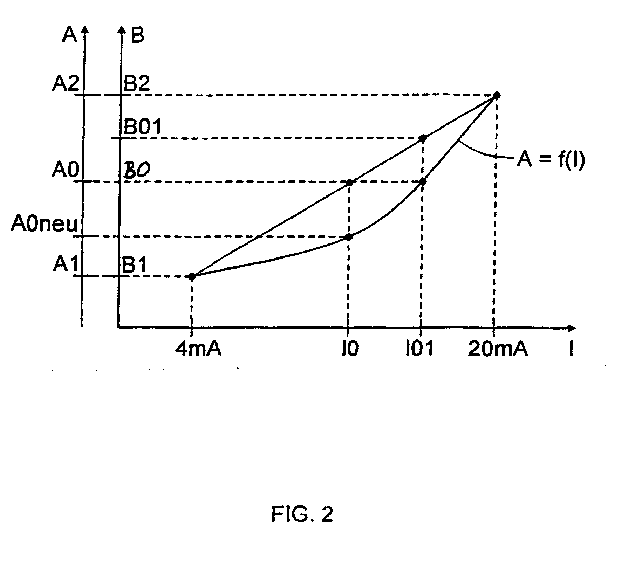

Darüber hinaus kann der Meßfehler in der Recheneinheit 7 bei der Berechnung des Sollwertes A berücksichtigt und so minimiert werden. Ein Beispiel hierfür zeigt Figur 2. Bei fehlerfrei arbeitenden Meßumformer werden nacheinander mit Sollwerten A1 und A2 die Eckwerte 4 mA und 20 mA des Aussteuerungsbereichs des Ausgangssignals I eingestellt und die zugehörigen Werte B1 und B2 der Differenzspannung B zwischen den Spannungsteilerabgriffen 17 und 20 ermittelt. Bei einem Ausgangssignal I ergibt sich ein Differenzspannungswert
BX = B1 + I (B2-B1)/(20mA-4mA), aus dem in der Recheneinheit 7 der Wert des Ausgangssignals I mit I=(20mA-4mA) (B-B1)/(B2-B1) berechnet wird.
Arbeitet der Meßumformer fehlerfrei, so stellt sich bei einem Sollwert A0 ein Wert I0 des Ausgangssignals I ein; aus dem zugehörigen Differenzspannungswert B0 wird in der Recheneinheit 7 der Ausgangssignalwert I0 berechnet. In Abhängigkeit von der Temperatur kann sich ein nicht mehr linearer Zusammenhang A = F(I) zwischen dem Sollwert A und dem damit eingestellten Ausgangssignal I ergeben, so daß bei dem Sollwert A0 ein Ausgangssignal I01 eingestellt wird. Aus dem zugehörigen Differenzspannungswert B01 berechnet die Recheneinrichtung 7 den Ausgangssignal I01 und die Differenz ΔI = I0-I01. In Abhängigkeit von ΔI kann jetzt der Sollwert A0 schrittweise solange verändert werden, bis sich bei einen neuen Sollwert A0neu der Ausgangssignalwert I0 einstellt. Wenn der funktionelle Zusammenhang A = F(I) näherungsweise bekannt ist, kann der neue Sollwert A0neu auch in einem einzigen Schritt mit A0neu = A0-(df(I)/dI). Δ1 errechnet werden.

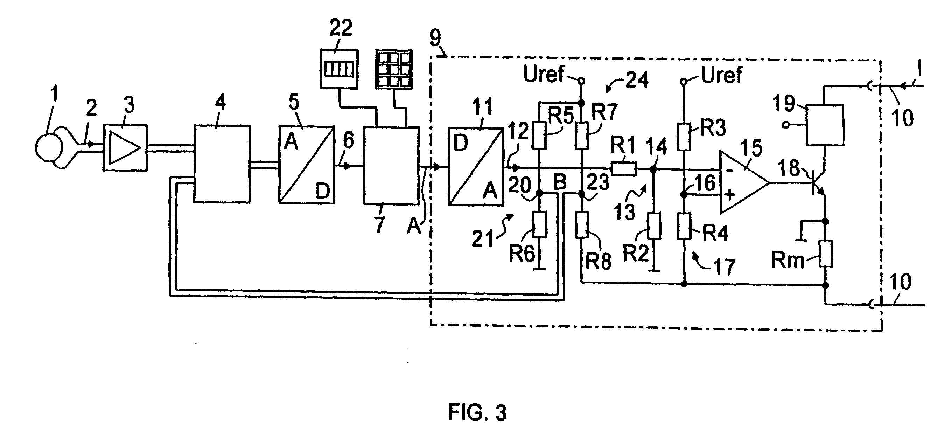

Figur 3 zeigt ein weiteres Ausführungsbeispiel der erfindungsgemäßen Meßumformers, das sich von dem nach Figur 1 dadurch unterscheidet, daß die Differenzspannung B zwischen dem Spannungsteilerabgriff 20 und dem Abgriff 23 eines zusätzlichen Spannungsleiters 24 erfaßt wird, der auf der einen Seite des Abgriffs 23 aus einem Widerstand R7 und auf der anderen Seite aus einem Widerstand R8 in Reihe mit dem Meßwiderstand Rm besteht und an der Referenzspannung Uref liegt. Dadurch sind die Einstellung des Ausgangssignals I und die Erfassung der Differenzspannung B voneinander entkoppelt, so daß die Widerstände der Spannungsteiler 13, 17 und 21, 24 voneinander unabhängig optimal eingestellt werden können.

## Patentansprüche

1. Meßumformer, der eine Meßgröße in ein auf einer Zweidrahtleitung (10) übertragbares analoges Ausgangssignal (I) umformt, mit einem Sensor (1), einem daran angeschlossenen Analog-/Digital-Umsetzer (5), einer diesen nachgeordneten Recheneinheit (7) und einer von der Recheneinheit (7) gesteuerten und an die Zweidrahtleitung (10) anschließbaren Ausgangsschaltung (9), wobei der Sensor (1) die Meßgröße in ein Sensorsignal (2) umformt, das in dem Analog-/Digital-Umsetzer (5) digitalisiert und in der Recheneinheit (7) zu einem Sollwert (A) aufbereitet wird, mit dem in der Ausgangsschaltung (9) das analoge Ausgangssignal (I) auf der Zweidrahtleitung (10) eingestellt wird, **dadurch gekennzeichnet, daß** Mittel (R3, R4, R5, R6, Rm) vorhanden sind, die das analoge Ausgangssignal (I) erfassen und dieses oder ein unmittelbar daraus abgeleitetes Signal (B) dem Analog-/Digital-Umsetzer (5) oder einem weiteren Analog-/Digital-Umsetzer zuführen und daß die Recheneinheit (7) dazu ausgebildet ist, eine Abweichung zwischen dem Ausgangssignal (I) und dem Sollwert (A) zu ermitteln.

2. Meßumformer nach Anspruch (1), **gekennzeichnet durch** eine Datenschnittstelle und /oder eine Anzeigevorrichtung (22) zur Übertragung bzw. Anzeige einer Information über die ermittelte Abweichung.

3. Meßumformer nach Anspruch (1) oder (2), **dadurch gekennzeichnet, daß** die Recheneinheit (7) dazu ausgebildet ist, den Sollwert (A) in Abhängigkeit von der ermittelten Abweichung derart zu korrigieren, daß die Abweichung zwischen dem mit dem korrigierten Sollwert (A0neu) eingestellten Ausgangssignal (I0) und dem nicht korrigierten Sollwert (A0) minimal wird.

4. Meßumformer nach einem der vorangehenden Ansprüche, **dadurch gekennzeichnet, daß** das Sensorsignal (2) und das Ausgangssignal (I) bzw. das daraus abgeleitete Signal (B) dem Analog-/Digital-Umsetzer (5) über einen Multiplexer (4) zugeführt werden.

5. Meßumformer nach einem der Ansprüche 1 bis 3, **dadurch gekennzeichnet, daß** das Sensorsignal (2) und das Ausgangssignal (I) bzw. das daraus abgeleitete Signal (B) jeweils unterschiedlichen Eingängen des Analog-/Digital-Umsetzers (5) zugeführt werden.

## Claims

1. Measuring transducer, which converts a measured quantity into an analogue output signal (I) which can be transmitted on a two-wire line (10), having a sensor (1), an analogue/digital converter (5) connected thereto, a computation unit (7) downstream of the latter and an output circuit (9) which is controlled by the computation unit (7) and can be connected to the two-wire line (10), wherein the sensor (1) converts the measured quantity into a sensor signal (2) which is digitised in the analogue/digital converter (5) and is processed, in the computation unit (7), to form a setpoint value (A) with which the analogue output signal (I) on the two-wire line (10) is adjusted in the output circuit (9), **characterised in that** there are means (R3, R4, R5, R6, Rm) which detect the analogue output signal (I) and deliver it, or a signal (B) derived directly from it, to the analogue/digital converter (5) or to a further analogue/digital converter, and **in that** the computation unit (7) is designed to determine a deviation between the output signal (I) and the setpoint value (A).

2. Measuring transducer according to Claim (1), **characterised by** a data interface and/or a display device (22) for transmitting or displaying information about the deviation which is determined.

3. Measuring transducer according to Claim (1) or (2), **characterised in that** the computation unit (7) is designed to correct the setpoint value (A) as a function of the deviation which is determined, in such a way as to minimise the deviation between the output signal (I0) adjusted with the corrected setpoint value (A0new) and the uncorrected setpoint value (A0).

4. Measuring transducer according to one of the preceding claims, **characterised in that** the sensor signal (2) and the output signal (I), or the signal (B) derived from it, are delivered to the analogue/digital converter (5) via a multiplexer (4).

5. Measuring transducer according to one of Claims 1 to 3, **characterised in that** the sensor signal (2) and the output signal (I), or the signal (B) derived from it, are respectively delivered to different inputs of the analogue/digital converter (5).

## Revendications

1. Transducteur de mesure, qui transforme une grandeur mesurée en un signal de sortie (I) analogique transmissible sur une ligne bifilaire (10) et qui comporte un capteur (1), un convertisseur analogique-numérique (5) raccordé à celui-ci, une unité de calcul (7) branchée du côté aval de ce dernier et un circuit de sortie (9) commandé par l'unité de calcul (7) et pouvant être raccordé à la ligne bifilaire (10), le capteur (1) transformant alors la grandeur mesurée en un signal de capteur (2) qui est numérisé dans le convertisseur analogique-numérique (5) et qui est préparé dans l'unité de calcul (7) pour donner une valeur de consigne (A) avec laquelle le signal de sortie analogique (I) sur la ligne bifilaire (10) est réglé dans le circuit de sortie (9), **caractérisé par le fait qu'**il est prévu des moyens (R3, R4, R5, R6, Rm) qui détectent le signal de sortie analogique (I) et qui envoient celui-ci ou un signal (B) déduit directement de celui-ci au convertisseur analogique-numérique (5) ou à un autre convertisseur analogique-numérique et que l'unité de calcul (7) est conçue pour déterminer un écart entre le signal de sortie (I) et la valeur de consigne (A).

2. Transducteur de mesure selon la revendication (1), **caractérisé par** une interface de données et/ou un dispositif d'affichage (22) pour la transmission ou l'affichage d'une information sur l'écart déterminé.

3. Transducteur de mesure selon la revendication (1) ou (2), **caractérisé par le fait que** l'unité de calcul (7) est conçue pour corriger la valeur de consigne (A) en fonction de l'écart déterminé de telle sorte que l'écart entre le signal de sortie (I0) réglé avec la valeur de consigne corrigée (A0neu) et la valeur de consigne non corrigée (A0) est minimal.

4. Transducteur de mesure selon l'une des revendications précédentes, **caractérisé par le fait que** le signal de capteur (2) et le signal de sortie (I) ou le signal (B) déduit de celui-ci sont envoyés au convertisseur analogique-numérique (5) par l'intermédiaire d'un multiplexeur (4).

5. Transducteur de mesure selon l'une des revendications 1 à 3, **caractérisé par le fait que** le signal de capteur (2) et le signal de sortie (I) ou le signal (B) déduit de celui-ci sont envoyés à chaque fois à des entrées différentes du convertisseur analogique-numérique (5).
